# EUROPEAN PATENT APPLICATION

(11) **EP 1 731 361 A2**
(43) Date of publication of application: **13.12.2006**
(21) Application number: 06447077.6
(22) Date of filing: 09.06.2006
(51) Int. Cl.: B60N 3/04

(54) **Anti-slip floor mat**

(30) Priority: 10.06.2005 FR 0505916; 10.06.2005 IT MI20051077; 10.06.2005 DE 202005000913 U
(71) Applicant: Domo NV, 9052 Zwijnaarde (BE); Sitip S.P.A., 24020 Cene (IT); Umbrani s.a.s. di Boldrini A & C, 06031 Bevagna (PG) (IT)
(72) Inventor: Boldrini, Antonio, 03031 Bevagna (PG) (IT)
(74) Representative: Brants, Johan P.E.

(57) **Abstract**

The present invention relates to a removable car floor mat for inhibiting slippage on a carpeted surface (15) in an automobile or other vehicle. The car floor mat comprises a pile fabric (6) on an upper surface of the mat; a backing (1), having loops (4) extending outwardly from the surface of the backing, said loops being adapted for repeated engagement and disengagement with said carpeted surface, and a bonding layer (8) for affixing said backing (1) to said pile fabric (6). The backing consists of a napped warp-knitted textile fabric essentially made of synthetic yarns.

## Description

### Field of the invention

The present invention relates to the field of floor covering. The invention relates to an anti-slip floor mat permitting to inhibit slippage on a carpeted surface, preferably of an automobile or other vehicle. In particular, the present invention relates to a mat comprising a backing which consists of a three-dimensional warp-knitted textile fabric made of synthetic yarns.

### Background

Protecting floor mats are more and more frequently used in motor vehicles so as to protect the carpeted floor of automobiles from dirt, moisture and from wear and tear. Such mats are generally manufactured with a planar configuration and are customarily made of an elastomeric material sufficiently flexible to conform, in a general way, when placed in use, to the multiplicity of shapes and contours characteristic of today's automobile floors. Generally, such floor mats are provided with textile surfaces for improving comfort and for providing a warm feeling in the vehicle.

It is an important requirement that such floor mats should be removable and should not slip despite the fact that they can be removed from the carpeted floor.

In the automobile sector, a primary concern with respect to such automobile floor mats is their tendency to shift or move from their intended position in response to lateral forces experienced during occupant ingress, egress and in the course of normal driving operations. This can result in the bunching, gathering and general disarray of the mat on the automobile floor. Moreover, movement of the floor mat on the driver's side can present a significant safety hazard if the mat shifts so as to interfere with the accelerator, brake pedal or other automobile controls. This may lead to the dangerous situation wherein the floor mat is moved forward by the heel of a driver and wherein the brake and/or the accelerator pedal becomes blocked. Automobile manufacturers have experienced major liability claims related to alleged floor mat movement, not to mention the toll in human suffering, property damage and increased insurance premiums arising from auto accidents. It is therefore important to prevent moving and slipping of such secondary floor mats in order to ensure a high security during driving. Mat movement is, therefore, considered a serious and significant concern in the automobile industry.

There have been a number of attempts made in the prior art to form floor mats which resist movement on carpeted surfaces.

It has been proposed to use clips for fixing floor mats on a carpeted floor. However, when using clips to fix the floor mats, the danger that the mats will be moved and slip remains because the carpet may tend to wrinkle and show bulges and valleys as a result of variable climate conditions or because the clips may become loose with increasing age and wear of the carpet.

Attempts have also been made in the past to increase the coefficient of friction between the floor mat and the supporting carpeted automobile floor. Particular attention has been drawn to the backside of the floor mats, the so-called "backing" of the mat. There has been proposed to use coatings comprising one or more binders. Examples of binders used in the art comprise rough rubber floor or granulates. Such backings however, frequently lead to the development of bad smells and to so-called fogging. Furthermore, these binders can not be recycled and during application they may be water-polluting. Moreover, production of this type of the floor mats is particularly expensive. In addition, such backings generally provide hardly any acoustic effects.

Another way of securing a floor mat in a particular location on an underlying carpet surface is to use hook and loop type fasteners such as for instance Velcro® fasteners.

DE 42 18 213 for instance illustrates a floor mat which can be secured to the floor carpet of a vehicle. The floor mat comprises on its underside a first part of a fastener, while the second part of the fastener is secured, e.g. by means of a screw-like fixing component, at the surface of the floor carpet.

WO 97/06029 describes a floor mat that is retained in place on a carpet floor covering by a hook and loop type fastener. The first, e.g. hook, portion of the fastener is anchored on the carpet floor covering while the second, e.g. loop, portion is disposed on an underside of the mat. The first fastener portion may be anchored on the carpet floor covering with a clip. In a preferred example, the loop portion of the floor mat is a woven, not brushed (unnapped) fabric, and more specifically a well-known and precise brand type of textile: Velcro 2000.

However, the above-described systems always require the use of two types of fasteners, i.e. hook fasteners that mate with loop fasteners. Such fasteners need to be applied on difference surfaces. Also, correct placement of the floor mat on the carpeted surface is required so that the mating portions of each hook and loop type fasteners are aligned. Misalignment diminishes and may totally defeat the mat retention function of the fasteners.

Although providing increased slip resistance, the above described efforts have thus not been totally successful in eliminating mat slippage and, in some cases, have been accompanied by undue complexity and manufacturing expense. Thus, there remains a substantial need in the art for providing improved carpet-protecting floor mats.

It is therefore an object of the invention to provide an improved floor mat having non-slip characteristics when placed on top of a carpeted surface, preferably the carpeted floor surface of an automobile or other vehicle.

It is in particular an object of the invention to provide an improved floor mat showing good non-slip characteristics without the need for using any type of fasteners or clips.

### Summary

The present invention provides another way of securing a floor mat in a particular location on an underlying carpet surface, without the need to use two types of inter-mating fasteners.

More in particular, the invention relates to a removable car floor mat for inhibiting slippage on a carpeted surface in an automobile or other vehicle comprising:
- a pile fabric on an upper surface of the mat;
- a backing, having loops extending outwardly from the surface of the backing, said loops being adapted for repeated engagement and disengagement with said carpeted surface, and
- a bonding layer for affixing said backing to said pile fabric
wherein said backing consists of a warp-knitted textile fabric essentially made of synthetic yarns.

The present invention thus provides a self-gripping and fastening floor mat. The backing of the floor mat is applied on the surface of a carpeted surface and provides a very good self-adhesion and a significant no-slipping action without the need for having any kind of hook structure or other fastening means on the carpeted surface to fasten with. Advantageously, the anti-slip floor mat according to the invention will therefore provide an anti-slipping effect to most types of carpeted surfaces. The floor mat is thus universally applicable.

In addition, the three-dimensional warp-knitted textile fabric is preferably applied on the complete under surface of the pile fabric, in order to provide optimal grip. This feature also provides the advantage that the floor mat can be manufactured in a easy and economic rentable way.

These and other aspects, features and advantages of the present invention will be more fully understood from the following detailed description of preferred embodiments, when read in conjunction with the accompanying drawings.

### Detailed description of the figures

Figure 1 illustrates the structure of an embodiment of a warp-knitted textile fabric used as backing in accordance with the present invention.

Figure 2 is a sectional schematic view through an embodiment of a car floor mat according to the present invention.

Figure 3 is a sectional schematic view through an embodiment of a car floor mat according to the present invention and a floor area covered with a carpeted surface.

### Detailed description of the invention

The present invention relates to an anti-slip floor mat for covering a carpeted surface, preferably the carpeted floor surface of an automobile or other vehicle, comprising an anti-slip backing as underlay. The anti-slip backing may be affixed to the underside of a conventional carpeted structure in order to form a floor mat. The backing substantially prevents slipping of the floor mat when the latter is applied on a carpeted surface.

These carpeted surfaces may include but are not limited to carpets having short or long back loops, velvety carpets, moquettes, rugs, tufted cut pile carpet, velour carpets, dilour non woven carpets, flat needle felt carpets etc.... Advantageously, the anti-slip backing according to the invention will provide an anti-slipping effect to most types of carpeted surfaces. The anti-slip car floor mat is thus universally applicable.

In one aspect, the invention relates to a floor mat for inhibiting slippage on a carpeted surface in an automobile or other vehicle. The floor mat comprises several layers of material including:
- a pile fabric on an upper surface of the mat;
- a backing, and
- a bonding layer for affixing said backing to said pile fabric.

The backing is in particular characterized in that it consists of a textile fabric, and in particular of a warp-knitted textile fabric, having loops extending outwardly from the surface of the fabric, said loops being adapted for repeated engagement and disengagement with said carpeted surface. Therefore, herein the words "backing" and "textile fabric" will be used interchangeably.

The loops of the textile fabric according to the invention are preferably napped Napped loops, i.e. loops that are randomly disoriented, typically allow for greater engagement opportunities.

The textile fabric according to the invention contains a warp and a weft. The term *"warp"* as used herein refers to the yarns in a woven fabric that run lengthwise. The warp is interwoven with the fill (weft) yarns. The term *"weft"* as used herein refers to the filling yarns in woven fabric that run perpendicular to the warp yarns. The warp comprises different warp elements, laying in a same direction, the so-called warp direction. The weft comprises different weft elements, laying in a same direction, the so-called weft direction. Each warp and weft element follows a certain path through the fabric, being respectively a warp path or a weft path.

According to the invention an "individual element" implies a warp element, preferably a yarn. A warp element is to be understood as one or more individual elements such as e.g. yarns, filaments, bundles of fibers, wires or cords, which follow the same path through the fabric in warp direction. Preferably, but not necessarily, all individual elements of a warp element cross the weft elements of the fabric in an identical way. Weft element is to be understood as one or more individual elements such as e.g. yarns, filaments, bundles of fibers, wires or cords, which follow the same path through the fabric in weft direction. Preferably, but not necessarily, all individual elements of a weft element cross the warp elements of the fabric in an identical way.

The terms "fibre" or "yarn" are used herein as synonyms.

*"Woven material"* implies material obtained by assembling fibers by means of a weaving or knitting technique. *"Weaving"* implies a method for forming a fabric or textile surface produced by interlacing yarns at right angles according to a prescribed pattern. *"Knitting"* implies a method for forming a fabric or textile surface produced by interlacing stitches (loops).

"Warp knitting" refers to a process wherein a number of threads arranged in longitudinal and horizontal direction are bound together by formation of stitches and in which the loops made from each warp thread are formed mainly along the length of the fabric. As used herein the term *"warp knitted fabric"* refers to a type of knitted fabric construction in which the yarns are formed into loops in a lengthwise manner.

A common example of a warp knitted fabric is a raschel knitted fabric. A *"raschel"* knitted textile fabric as used herein refers to a warp knitted fabric in which the resulting knit fabric resembles hand crocheted fabrics, lace fabrics, and nettings.

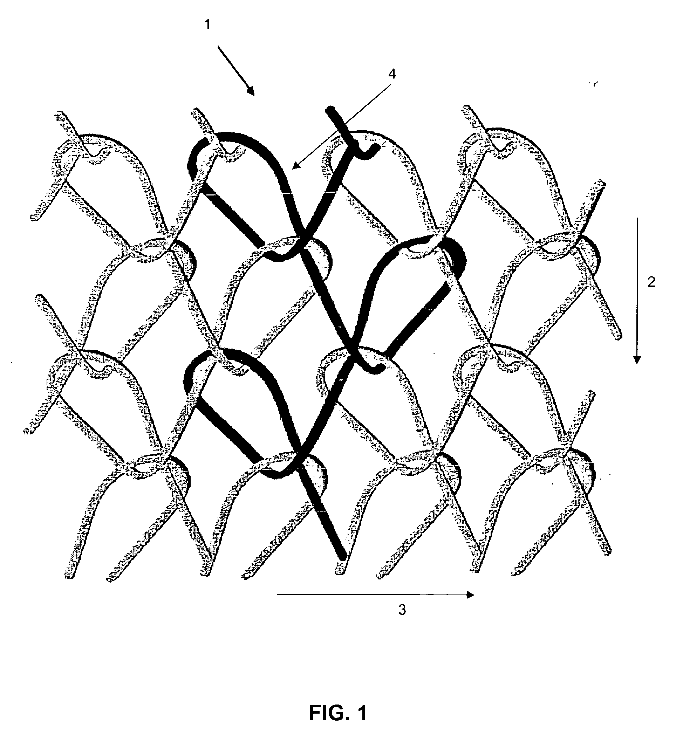

**Figure 1** illustrates a structure of an embodiment of a warp knitted textile fabric 1 according to the present invention. The fabric consists of several threads warp which are formed to loops 4 via needles and extend through the fabric 1 mainly in longitudinal (vertical) direction 2. The loops 4 made from each warp thread are formed mainly along the length 2 of the fabric 1.

The present textile fabric, as described herein, is particularly suitable for being used as a backing. Such backing is generally affixed to a pile fabric, in order to form a floor mat for inhibiting slippage on a carpeted surface. However, it shall be understood that the present textile fabric is not limited to the use as backing. The present textile fabric may also be applied for the production of carpets, runners, automotive components, and materials for furnishing and industrial applications.

The textile fabric preferably covers substantially the entire underside of the pile fabric to which it is bonded, providing an aesthetically attractive surface on a conveniently fabricated pile fabric and providing good gripping properties to an underlying carpet surface. The term "substantially", as used in this context refers to a coverage by more than 50 %, preferably more than 80 %, and more preferred more than 90 % of the underside surface of the pile fabric. In a particularly preferred embodiment, the textile fabric preferably covers more than 95 % of the underside surface of the pile fabric.

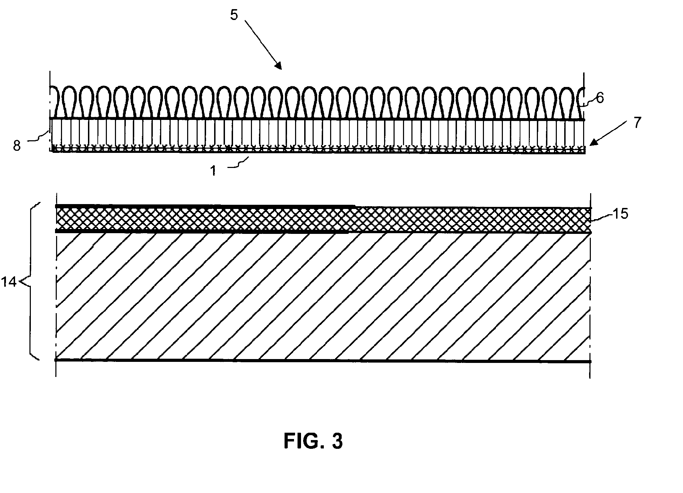

Referring to **figure 3** for instance, a floor mat 5 is illustrated comprising a pile fabric 6 to the underside surface of which a textile fabric 1 according to the present invention is bonded. The textile fabric 1 covers substantially the entire underside surface 7 of the pile fabric 6.

The floor mat according to the present invention preferably has a weight comprised between 1200 and 5000 g/m². In another embodiment, the invention provides a floor mat which has a thickness comprised between 4 and 15 mm.

When the anti-slip floor mat is applied to (a part of) a carpeted surface, it will, because of its flexibility, adapt to the structure and configuration of the carpet. It can also follow the angles and grooves of said carpet. The loops of the anti-slip backing may penetrate on a large part of the surface of the carpet. By simple application of the floor mat onto a carpet, a slip-resistant, anchoring of the anti-slip floor map onto the carpet can be obtained. When a pressure is exerted on the mat, e.g. by walking over the carpeted structure, or by a pressing a drivers foot onto the mat, the mat will even be more pressed and anchored into the underlying carpet, which greatly reduces movements of the mat in case of feet movements.

The present invention thus provides an anti-slip floor mat having the following properties. Advantageously, it may be applied on various types of carpeted surface, without the need of providing hook types or other types of fastening means on the carpeted surface and/or on the floor mat for fixation thereof. It further greatly diminishes the risk of slipping of the floor mat when applied on a carpeted surface. Furthermore, it provides sufficient resistance and stability to the floor mat in the longitudinal and the transverse direction against slipping and deformation. It also reduces wear and tear and improves durability of the covered carpeted surface. Another major advantage is that the present mat is secured on an carpeted surface in place regardless of whether the mat is properly positioned in the floor area or not. No alignment or other active intervention by the user is required. In addition, it permits to reduce noise and provides some thermal isolation.

Its manufacturing process is simple and cost-effective. The floor mats are fabricated starting from large mats consisting of a pile fabric of which the underside is provided with a backing as defined herein. These large mats are subsequently cut into smaller floor mats of various sizes.

The textile fabric according to the present invention is characterized by a number of technical parameters such as type of yarns, compactness (number of weft threads per cm fabric), used yarns counts (thickness of the yarns), weight, loop length, etc... Such parameters are chosen and composed in such a way that a textile fabric is obtained which complies with optimal gripping and anti-slip characteristics. The technical parameters of a textile fabric according to the present invention are discussed in more detail below.

The present warp-knitted textile fabric preferably essentially comprises of synthetic yarns. The term *"essentially"* refers to a fabric wherein more than 50 % w/v, preferably more than 80 % w/v, and more preferred more than 90 % w/v of the yarns of the fabric are made of synthetic material. Suitable synthetic materials of which the yarns can be made of include but are not limited to polypropylene, polyethylene, polyester, polyamide, polyacryl, polyvinyl, polyaramide etc or any mixtures thereof. In a preferred embodiment, more than 50%, and preferably more than 70 %, and even more preferred more than 90% of the total weight of the textile fabric consists of synthetic yarns, and preferably of polyamide yarns.

The textile fabric according to the present invention preferably has a weight comprised between 50 and 1000 g/m², and preferably 80 to 500 g/m², and even more preferred between 100 and 300 g/m². In an example, a textile fabric according to the present invention has a weight of 120 to 160 g/m².

In an embodiment, the invention provides a textile fabric which has a thickness comprised between 0.2 and 2 mm, and preferably between 0.5 and 1.5 mm, and more preferably between 0.7 and 1.1 mm.

In another embodiment, the textile fabric according to the present invention has a number of wales (warp threads) per cm fabric comprised between 10 and 20 and preferably between 12 and 17.

In another preferred embodiment, the textile fabric according to the present invention preferably has a number of courses (weft threads) per cm fabric comprised between 10 and 45 and preferably between 15 and 40.

The loops extending outwardly of the surface of the textile fabric according to the invention are designed to accommodate repeated engagement and pee-apart disengagement cycles and are sized, constructed and located such that they can be easily engaged with the structure of an underlying carpeted surface, regardless of mat placement. As a result of the gripping of the loops of the textile fabric into the carpet structure, the floor mat is able to resist movements from forces exerted thereupon over a wide variety of angles and directions.

In yet another embodiment the textile fabric according to the present invention is characterized by its tensile strength and its tensile elongation. The tensile strength is defined as the resistance of a material to a force tending to tear it apart, measured as the maximum tension the material can withstand without tearing. The tensile elongation is defined as the percentage increase in length that occurs before the fabric breaks under tension.

In a preferred embodiment, the textile fabric according to the present invention has a tensile strength in longitudinal which is comprised between 200 and 250 N, and preferably between 220 and 240 N. In another preferred embodiment, the textile fabric according to the present invention has a tensile strength in transversal direction which is comprised between 200 and 250 N, and preferably between 220 and 240 N.

In another embodiment the textile fabric according to the present invention has a tensile elongation in longitudinal direction which is comprised between 100 and 130 % and preferably between 120 and 128 %. The textile according to the present invention is further characterized by a tensile elongation in transversal direction which is comprised between 35 and 45 % and preferably between 37 and 42 %.

In yet another embodiment the load which can be applied on the textile fabric to have an elongation of 20% in longitudinal direction is comprised between 10 and 15 N and preferably between 11 and 12.5N. The load which can be applied on the textile fabric to have an elongation of 20% in transversal direction is comprised between 150 and 180 N, and preferably between 160 and 170N.

In another embodiment the load which can be applied on the textile fabric to have an elongation of 50% in longitudinal direction is comprised between 40 and 50 N and preferably between 42 and 45 N.

The textile fabric according to the present invention is further characterized by a tensile elongation to 50 N in longitudinal direction which is comprised between 100 and 110 %, and preferably a tensile elongation to 50 N in transversal direction which is comprised between 8 and 10 %.

Also, the textile fabric according to the present invention comprises loops that extend outwardly from the surface of the fabric to a height H, and wherein said loops have, at the height H/2, a width B which is ≤2/3 H.

Preferably the textile fabric comprises a loop length per mm fabric that is comprised between 0.2 and 3 mm, and preferably between 0.50 and 2 mm.

In addition, the textile fabric according to the present invention preferably has a number of loops per cm fabric in the warp direction comprised between 10 and 30 and preferably between 15 and 22.

All loops in the fabric may have a same loop length/loop height. It is also possible to apply different loop lengths/loop heights in the fabric. For instance; the loops on part of the fabric may have different characteristics, and in particular may have a different loop length/loop height, than the loops at another part of the fabric. Also, loops having different loop lengths/loop heights may be applied on one fabric. The dispersion of the loops on the surface of the textile fabric can be random or uniform.

The loops used to restrain movement of the floor mat in accordance with the principles of the present invention, ensures substantial resistance to mat movement due to exertion of lateral forces, while simultaneously permits easy removal of the floor mat for cleaning and other purposes. These properties persist through recurrent removal, cleaning and reinstallation cycles of the mat.

In another embodiment, the textile fabric comprises monofilament and multifilament yarns or a combination thereof. Preferably, multifilament yarns form the loops. Preferably the yarns in the textile fabric have a yarn count of between 17 and 235 dtex, preferably of between 17 and 78 dtex. These yarn counts are suitable for wales (warp threads) as well as for courses (weft threads).

The present invention also relates to a method for fabricating an anti-slip textile fabric according to the invention. The method comprises the steps of:
a) forming a warp-knitted fabric as defined herein having loops extending outwardly from the surface of the fabric, said loops being adapted for repeated engagement and disengagement with a carpeted surface,
b) raising the loops of said fabric,
c) coating the fabric obtained in step b) by means of a coating agent;
d) finishing the coated fabric obtained in step c).

The coating and finishing step of the present method permit to reduce fabric elasticity and to increase loop and peel resiliency.

The step of raising the loops is an operation made at room temperature which has the function to raise the flanges to create a fabric with a given thickness, a given density, a given unbroken loop-shape in a way that the yarn filaments are so arranged, leveled and directed as to obtain self-hooking and anti-slipping features when the fabric is put on a carpeted surface. This treatment is generally obtained making use of well-known napping machines through a mechanical action generated from cylinders with wires.

The coating agents used in step c) may be selected from the group comprising melamine resins dispersed in water. The coating is performed by foulard dipping and heat-setting at a temperature of between 150 and 180°C for 2-3 minutes.

The step of finishing the fabric is generally dome by means of passing the fabric in a Stenter frame at high temperature to obtain a good dimensional stability, the desired unbroken ioop strength, hardness, resilience and uplift or erection.

In another embodiment, the invention provides a car floor mat having a pile fabric which comprises of a primary backing having piles projecting from the upper side thereof. The term "piles" as used herein refers to the raised loops or tufts that form all or a portion of the surface of a fabric. The pile fabric can be woven, knitted, tufted, needle punched or otherwise constructed. The pile fabric can be produced from any textile fibers, e.g. nylon, polyester, polypropylene, etc.. and in any construction patter, gauge, stitches /cm, etc.. In accordance with the present invention the pile fabric preferably is a cut pile (velour) or loop pile fabric.

Preferably, the underside of the pile fabric may have a filament binding layer for locking individual loops into the primary backing material. Preferably said filament binding layer may include an agent selected from the group comprising but not limited to acrylic adhesive (acrylate), synthetic rubber adhesive (e.g. latex), styrol butadiene latex, vinyl acetate adhesive (e.g. EVA), etc...

The textile fabric on the underside of the mat is secured to pile fabric on the top surface of the mat with an appropriate bonding agent. The bonding agent is preferably compatible for adhesion to both textile fabric and the pile fabric, as well as preferably suitable for environment conditions involving e.g. wide temperature fluctuations. Preferably, the bonding agent also provides a vapor barrier within the mat. A layer of TPO (thermoplastic olefin) can for instance serve as the bonding agent (and moisture barrier) between the (coated) pile fabric and the textile fabric. Other suitable bonding agents may be selected from the group comprising but not limited to copolyamide, co-polyester, polyethylene (LDPE, HDPE), EVA, latex, etc...

Optionally, the car floor mat according to the invention may further comprise an additional adhesive layer for securing the backing to the bonding layer.

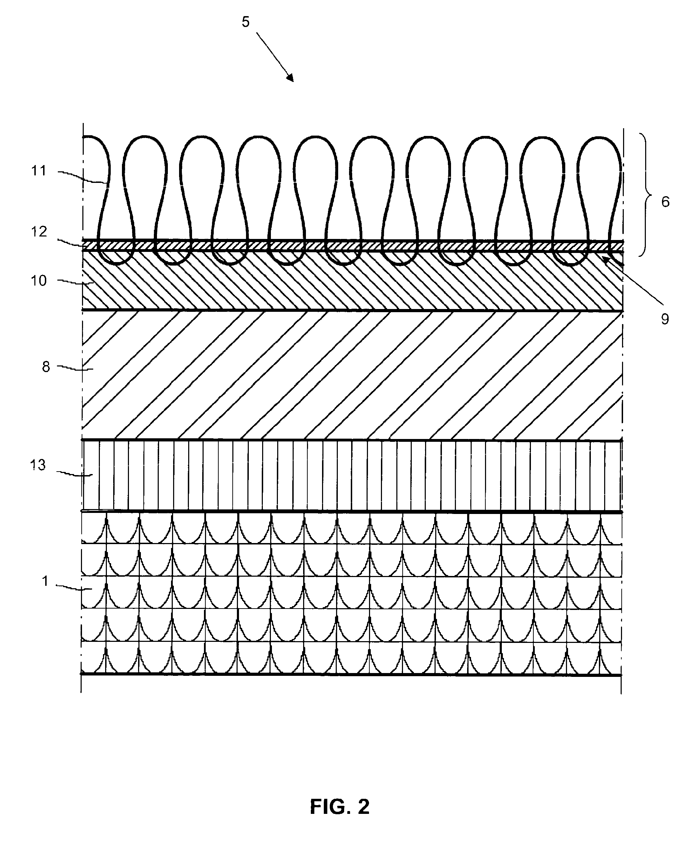

Referring to **figure 2**, an embodiment of a floor mat 5 according to the invention is shown. The floor mat shows a laminated structure and consists of different layers which are secured to one another. More in particular, the floor mat 5 comprises a pile fabric 6 on an upper surface of the mat, a textile fabric backing 1 as defined herein, and a bonding layer 8 for affixing the textile backing to the pile fabric. Preferably, the underside 9 of pile fabric is provided with a filament binding layer 10 for locking individual loops 11 of the fabric into primary backing material 12. Optionally, the floor mat 5 may be further provided with an additional layer 13, provided in between the bonding layer 8 and the textile fabric backing 1.

In a further embodiment, the present floor mat may be further provided with an edge finishing strip (not shown), which extends along the periphery and preferably also along at least a part of the upperside and/or the underside of the car floor mat. Some loops of the textile fabric may lie in the boundary region, which is overlapped with the strip. The strip can be applied over the loops and the loops may thereby be somewhat crushed. Alternatively, loops may also be cut off in the boundary region. The strip is generally strongly attached to the periphery region.

**Figure 3** illustrates a sectional view through an embodiment of a floor mat 5 according to the present invention and a carpeted surface 15. A textile backed floor mat 5 according to the invention may be positioned on top of a floor area 14 that has been covered with a carpet 15. The carpeted surface 15 is not provided with any type of fasteners for locking the loops outwardly extending from the textile backing 1 of the floor mat 5. The present floor mat does not require the presence of a hook type or other type of fasteners on the carpeted surface for ensuring good gripping properties. However, it should be clear that the present floor mat could also be applied on a carpeted surface that is provided with a hook type or other type of fasteners.

The present invention also further relates to a method for producing a floor mat according to the present invention. The method is substantially based on bonding of the anti-slip backing as defined herein on a pile carpet. For that, any conventional bonding technique may be applied. Optionally, the method comprises the adhesion of an additional layer on the upper side of the backing prior to bonding said upper side to a pile fabric. Advantageously, the present floor mat can be manufactured at moderate cost from readily-available commercial materials.

In summary, the anti-slip car floor mat of the present invention provides an improved solution to the mat slippage problem. The textile backed, floor mat may be immediately, automatically and firmly secured in place, regardless of mat placement within the floor well. Mat slippage is avoided without requiring precise mat alignment. Furthermore, the present car floor mat does not require the presence of a hook type or other type of fasteners on the carpeted surface for ensuring good gripping properties. However, the possibility of applying the present floor mat on a carpeted surface that is provided with a hook type or other type of fasteners is not excluded from the present application.

It is further noted that the present invention also relates to a car comprising one or more car floor mat as defined herein.

In an example, gripping properties of a floor mat comprising a backing as defined herein were tested. Floor mats of different dimensions were tested at a temperature of 20°C and a relative humidity of 70%. The floor mats were put on a bench which had a carpeted surface of 6 X 2 m of the type polyamide 6 - 1/10. The pile fabric of the carpeted surface had a weight of 650 g/ m² and a thickness of 6 mm and 240.000 stitches/m². The floor mats had a total weight of 2050 g/m² (i.e. pile fabric + backing).

During the experiment a traction force of 50 kg was applied on the floor mat in the longitudinal direction of the floor mat. The grip force of the floor mat was measured with a dynamometer and expressed in kilograms. Results of different experiments illustrated that the gripping properties of a floor mat comprising a backing as defined herein were substantially better than the gripping properties of prior art floor mats. The applicants have shown that the present floor mats have a frictional engagement that is significantly higher than that of prior art floor mats.

In the drawings, the following reference signs have been used.
- 1: textile backing
- 2: warp direction
- 3: weft direction
- 4: loop
- 5: floor mat
- 6: pile fabric
- 7: underside of pile fabric
- 8: bonding layer

- 9: underside of primary backing
- 10: filament binding layer
- 11: loop of pile fabric
- 12: primary backing
- 13: adhesive layer
- 14: floor area
- 15: carpeted surface

## Claims

1. A removable floor mat (5), in particular a car floor mat, for inhibiting slippage on a carpeted surface (15) in an automobile or other vehicle comprising:
- a pile fabric (6) on an upper surface of the mat;
- a backing (1), having loops (4) extending outwardly from the surface of the backing, said loops being adapted for repeated engagement and disengagement with said carpeted surface, and
- a bonding layer (8) for affixing said backing (1) to said pile fabric (6)
wherein said backing (1) consists of a warp-knitted textile fabric essentially made of synthetic yarns.

2. Car floor mat according to claim 1, wherein said backing (1) comprises synthetic yarns selected from the group comprising polypropylene, polyethylene, polyester, polyamide, polyacryl, polyvinyl, polyaramide or any mixtures thereof.

3. Car floor mat according to claim 1 or 2, wherein more than 50%, and preferably more than 70 %, and even more preferred more than 90% of the total weight of the textile fabric consists of polyamide yarns.

4. Car floor mat according to any of claims 1 to 3, wherein the loops (4) of said textile fabric are napped.

5. Car floor mat according to any of claims 1 to 4, wherein said textile fabric has a weight comprised between 50 and 1000 g/m², and preferably 80 to 500 g/m², and even more preferred between 100 and 300 g/m².

6. Car floor mat according to any of claims 1 to 5, wherein said textile fabric has a thickness comprised between 0.2 and 2 mm.

7. Car floor mat according to any of claims 1 to 6, wherein said textile fabric has a number of wales per cm fabric comprised between 10 and 20.

8. Car floor mat according to any of claims 1 to 7, wherein said textile fabric has a number of courses per cm fabric comprised between 10 and 45.

9. Car floor mat according to any of claims 1 to 8, wherein said textile fabric has a number of loops (4) per cm fabric in the warp direction (2) comprised between 10 and 30.

10. Car floor mat according to any of claims 1 to 9, wherein said textile fabric comprises loops that extend outwardly from the surface of the fabric to a height H, and wherein said ioops have, at the height H/2, a width B which is ≤2/3 H.

11. Car floor mat according to any of claims 1 to 10, wherein said textile fabric comprises a loop length per mm fabric on one side of the fabric that is comprised between 0.2 and 3 mm.

12. Car floor mat according to any of claims 1 to 11, wherein said yarns in the textile fabric have a yarn count of between 17 and 235 dtex, preferably of between 17 and 78 dtex.

13. Car floor mat according to any of claims 1 to 12, wherein said pile fabric (6) comprises of a primary backing (12) having piles (11) projecting from the upper side thereof, said piles being cut piles or loop piles.

14. Car floor mat according to any of claims 1 to 13, wherein said pile fabric (6) further comprises a filament binding layer (10) for securing the cut pile or loop pile (11) to the primary backing (12).

15. Use of a textile fabric as defined in any of claims 1 to 12, as a backing that is suitable to be affixed to a pile fabric, in order to form a floor mat for inhibiting slippage on a carpeted surface in an automobile or other vehicle.

16. Car comprising one or more car floor mats (5) as defined in any of claims 1 to 14.
